## Europäisches Patentamt
## European Patent Office
## Office européen des brevets

(19)

(11) Veröffentlichungsnummer: **0 185 875**
**B1**

(12) # EUROPÄISCHE PATENTSCHRIFT

(45) Veröffentlichungstag der Patentschrift:
23.08.89

(51) Int. Cl.⁴: **F 03 G 7/06**

(21) Anmeldenummer: **85113291.0**

(22) Anmeldetag: **19.10.85**

(54) **Kraftelement.**

(30) Priorität: **22.12.84 DE 3447035**

(43) Veröffentlichungstag der Anmeldung:
**02.07.86 Patentblatt 86/27**

(45) Bekanntmachung des Hinweises auf die Patenterteilung:
**23.08.89 Patentblatt 89/34**

(84) Benannte Vertragsstaaten:
**AT BE CH DE FR GB IT LI LU NL SE**

(56) Entgegenhaltungen:
**DE-A-3 027 750**
**US-A-3 696 611**

**PATENTS ABSTRACTS OF JAPAN, Band 8, Nr. 230
(M-333) 1667 , 23. Oktober 1984; & JP - A - 59 110 874
(KEIHIN SEIKI SEISAKUSHO K.K.) 26-06-1984
PATENTS ABSTRACTS OF JAPAN, Band 8, Nr. 249
(M-338) 1686 , 15. November 1984; & JP - A - 59 126 085
(MATSUSHITA DENKI SANGYO K.K.) 20-07-1984
PATENTS ABSTRACTS OF JAPAN, Band 8, Nr. 230
(M-333) 1667 , 23. Oktober 1984; & JP - A - 59 110 875
(KEIHIN SEIKI SEISAKUSHO K.K.) 26-06-1984
PATENTS ABSTRACTS OF JAPAN, Band 9, Nr. 164
(M-395) 1887 , 10. Juli 1985; & JP - A - 60 36 786 (KEIHIN
SEIKI SEISAKUSHO K.K.) 25-02-1985**

(73) Patentinhaber: **Dynamit Nobel Aktiengesellschaft,
Postfach 12 61, D-5210 Troisdorf (DE)**

(72) Erfinder: **Bender, Richard, Dr., Hohe Marter 28,
D-8560 Lauf (DE)**
Erfinder: **Brede, Uwe, Boernerstrasse 32, D-8510
Fürth (DE)**

EP 0 185 875 B1

## Beschreibung

Die Erfindung betrifft ein Kraftelement zum Betätigen von Stell- oder Auslöseeinrichtungen, enthaltend ein aus einem Gehäuse herausragendes Betätigungslement, bewegbar durch eine elektrisch auslösbare Bewegungsvorrichtung aus einem temperaturabhängig sein Gefüge und seine Form sprunghaft veränderndem Material mit Formgedächtnis (memory metal).

Bekannt sind Kraftelemente auf pyrotechnischer Basis, die z. B. durch Abbrand einer gaserzeugenden pyrotechnischen Mischung im Innern eines Gehäuses einen solchen Gasdruck erzeugen, daß eines oder mehrere stiftförmige Elemente eingezogen oder ausgestoßen werden. Derartige pyrotechnische Druckgas-Kraftelemente benötigen einen hohen Gasdruck. Das Gehäuse muß eine entsprechend hohe Festigkeit und Dichtigkeit haben. Ein weiterer Nachteil besteht darin, daß der Einsatz eines derartigen Kraftelementes infolge des hohen Druckes eine Gefahr für die Umgebung darstellt.

Bekannt sind für andere Anwendungen Formkörper mit Formgedächtnis. Derartige Formkörper bestehen aus Metall, das bei niedriger Temperatur ein Martensitgefüge hat, welches bei höherer Temperatur in ein Austenitgefüge übergeht. Durch diese Gefügeveränderung tritt bei Überschreiten eines bestimmten Temperaturwertes schlagartig eine Formänderung des Formkörpers ein, der sich zusammenzieht. Bei nachfolgender Temperaturabsenkung bildet sich das Martensitgefüge zurück und der Formkörper streckt sich wieder. Derartige Formkörper mit Formgedächtnis bestehen beispielsweise aus einem Material, das unter der Marke Tinel erhältlich ist. Dieses Material ist elektrisch leitend und wirkt zugleich als Heizwiderstand zum Erzeugen der Verformungstemperatur.

In der JP-A-59-110 874 ist eine Einrichtung beschrieben, durch die der Abstand zweier beweglicher Teile vergrößert werden kann, wenn ein Bewegungskörper aus einem temperaturabhängig sein Gefüge und seine Form ändernden Material durch ein elektrisches Heizelement aufgeheizt wird.

In der JP-A-59 126 085 ist beschrieben, daß eine Längenänderung an einem Rohrstücke ohne separater Heizeinrichtung erzielt werden kann, wenn das Rohr aus einem memory metal-Werkstoff besteht und es außen mit einer Lage aus festem Brennstoff beschichtet ist, weil beim Anzünden des Brennstoffs ein Temperaturanstieg auf über 100°C erreicht und dadurch ein axiales Schrumpfen des Rohres bewirkt wird.

Der Erfindung liegt die Aufgabe zugrunde, ausgehend von einer Einrichtung, die in der JP-A-59-110 874 beschrieben ist, ein Kraftelement zum Betätigen von Stell- oder Auslöseeinrichtungen zu schaffen, bei dem die Bewegungsvorrichtung für das Betätigungselement wenig Energie erfordert und eine kurze Antwortzeit hat.

Die Lösung dieser Aufgabe besteht erfindungsgemäß darin, daß die Bewegungsvorrichtung als geschlitztes Rohr ausgebildet und eine auf das Rohr abgestimmte Heizvorrichtung vorhanden ist. In einer bevorzugten Ausführungsform ist die Heizvorrichtung eine Heizpatrone.

Das erfindungsgemäße Kraftelement weist einen Formkörper mit Formgedächtnis und zusätzlich ein Heizelement auf. Das Auslösen des Kraftelementes erfolgt durch Aktivierung des Heizelementes, das seinerseits thermisch auf den Formkörper einwirkt und eine Formänderung dieses Formkörpers zur Folge hat. Dadurch wird das Betätigungselement entweder in das Gehäuse eingezogen oder aus diesem ausgestoßen, um die Stell- oder Auslöseeinrichtung zu betätigen. Als Einsatzgebiete für das Kraftelement bieten sich beispielsweise an, die Verwendung zum Betätigen von Schiebern, beispielsweise als Zündersicherungen für Munition, als Türöffner im Falle eines Unfalls an Kraftfahrzeugen und als Brandschutzeinrichtungen, z. B. zum Auslösen von Ventilen.

Das Heizelement und der Formkörper bilden eine in dem Gehäuse untergebrachte Einheit. Das Gehäuse läßt sich auf einfache Weise gegen Feuchtigkeit abdichten. Zur Auslösung des Kraftelementes wird nur eine geringe pyrotechnische oder elektrische Energie benötigt, und es tritt keine Lärmbelästigung auf.

Gemäß einer bevorzugten Ausführungsform der Erfindung ist das Heizelement eine pyrotechnische Ladung mit einem Zündelement. Gegenüber solchen Kraftelementen, bei denen die gesamte Stellkraft durch den Druck, einer pyrotechnischen Ladung erzeugt wird, besteht der Vorteil darin, daß bei dem erfindungsgemäßen Kraftelement ein viel geringerer Druck auftritt bzw. das Abbrennen der pyrotechnischen Ladung nahezu drucklos erfolgt. Sicherheitsprobleme treten beim Auslösen des Kraftelementes nicht auf. Der Heizsatz erzeugt beim Abbrand keine aggressiven Gase. Die pyrotechnische Ladung kann in einer sehr kleinen Dosis eingesetzt werden, die gerade ausreicht, um die für die Formänderung des Formkörpers benötigte Temperatur zu erzeugen.

Gemäß einer anderen bevorzugten Ausführungsform der Erfindung ist das Heizelement eine Heizpatrone.

Der Formkörper besteht aus einem sich bei Erwärmung axial zusammenziehenden, geschlitzten Rohr, wobei das Heizelement entweder im Innern des Rohres oder als äußerer Mantel um das Rohr angeordnet sein kann. Die Anordnung als Mantel hat den Vorteil, daß der Formkörper an der Innenfläche des Mantels anliegen kann und bei der Kontraktion nicht durch den Mantel behindert wird.

Zur Verringerung der Wärmeverluste besteht das Gehäuse zweckmäßigerweise aus einem schlecht wärmeleitenden Material, z. B. aus Kunststoff.

Bei Verwendung einer pyrotechnischen Mischung, z. B. aus Thermit, kann die Erwärmung entweder durch eine chemische Reaktion oder über ein elektrisches Zündelement ausgelöst werden. Als Zündelement kann eine Zündpille, ein Glühdraht oder ein elektrisch oder durch mechanischen Stoß aktivierbares Anzündhütchen benutzt werden.

Das Gehäuse besteht vorzugsweise aus einem Material, das so temperaturbeständig ist, daß es die zum Auslösen des Kraftelementes benötigte Temperatur ohne wesentliche Formänderung aushält. Das Gehäuse und der Formkörper können nach einem Auslösevorgang wieder verwendet werden, so daß es allenfalls erforderlich ist, das Heizelement auszuwechseln, wenn dieses beim Auslösevorgang zerstört wird.

Im folgenden werden unter Bezugnahme auf die Zeichnungen Ausführungsbeispiele der Erfindung näher erläutert.

Es zeigen:

Fig. 1  einen Längsschnitt durch eine erste Ausführungsform des Kraftelementes, bei der der Formkörper im Innern des Heizelementes angeordnet ist,

Fig. 2  eine zweite Ausführungsform, bei der der Formkörper das Heizelement umgibt und

Fig. 3  ein drittes Ausführungsbeispiel, ohne Gehäuse, bei dem das Heizelement aus einer Heizpatrone besteht.

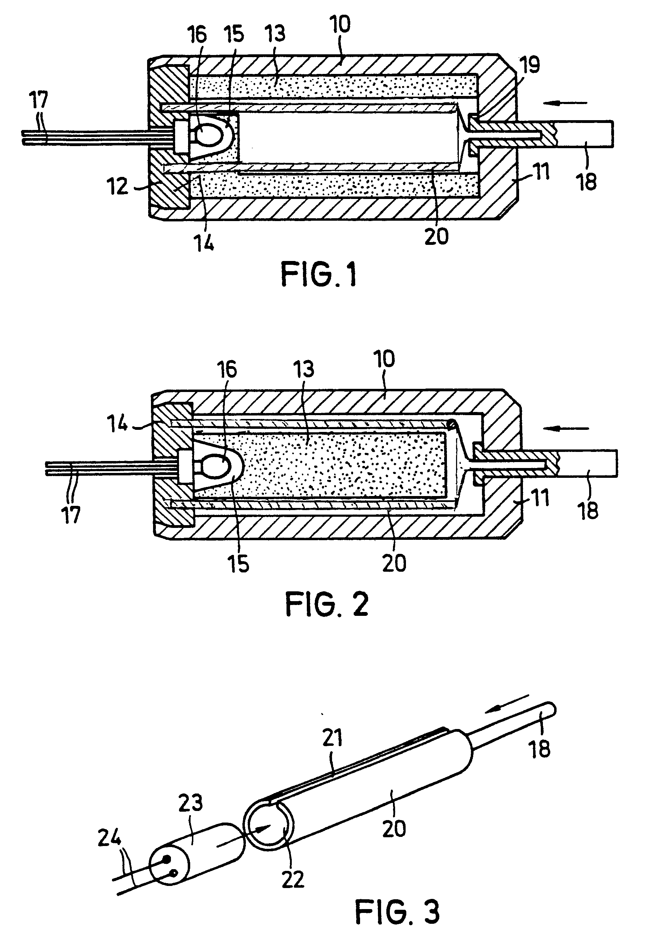

Bei dem Ausführungsbeispiel der Fig. 1 weist das Kraftelement ein zylindrisches Gehäuse 10 auf, das aus einem schlecht wärmeleitenden Material besteht und an einem Ende eine angeformte Stirnwand 11 aufweist. Die gegenüberliegende Stirnwand 12 ist nachträglich am Gehäuse 10 befestigt.

In dem Gehäuse 10 ist ein rohrförmiges Heizelement 13 in Form eines Preßkörpers aus einer pyrotechnischen Mischung, z. B. Thermit, untergebracht, das mit seiner Außenseite vollflächig an der Innenwand des Gehäuses 10 anliegt. Der pyrotechnische Heizsatz weist an einem Ende eine Stirnwand 14 mit einer koaxialen Ausnehmung 15 zur Aufnahme eines Zündelementes 16 in Form einer Zündpille auf. Von dem Zündelement 16 führen Zünddrähte 17 durch eine Bohrung der Stirnwand 12 aus dem Gehäuse 10 heraus.

In der gegenüberliegenden Stirnwand 11 des Gehäuses 10 befindet sich eine Bohrung, deren Achse mit der Achse des Gehäuses 10 zusammenfällt. Durch diese Bohrung führt das Betätigungselement 18, das die Form eines langgestreckten zylindrischen Stiftes hat, aus dem Gehäuse heraus. Das rückwärtige Ende des Betätigungselementes 18 stützt sich mit einem Ringkragen 19 an dem im Gehäuseinneren liegenden Rand der Bohrung ab. An dem Betätigungselement 18 ist das eine Ende des Formkörpers 20 befestigt. Dieser Formkörper besteht aus einem geschlitzten Rohr.

Das gegenüberliegende Ende des Formkörpers 20 ist an der Stirnwand 12 des Gehäuses 10 befestigt.

Der Formkörper 20 besteht aus einem Metall mit Formgedächtnis. Bei Erwärmung ändert sich bei Erreichen einer Sprungtemperatur das metallische Gefüge des Formkörpers, wodurch der Formkörper sich axial zusammenzieht. Dadurch wird bei dem vorliegenden Ausführungsbeispiel das Betätigungselement 18 in das Gehäuse 10 eingezogen. Bei nachfolgender Abkühlung des Formkörpers 20 nimmt dieser seine ursprüngliche Form wieder an und das Betätigungselement 18 wird wieder in die (dargestellte) Ruheposition zurückgedrückt.

Das Auslösen des Kraftelementes erfolgt dadurch, daß in die Leitungen 17 ein Strom geschickt wird. Hierdurch wird das Zündelement 16 gezündet und die pyrotechnische Mischung zum Abbrennen gebracht. Durch die hierdurch bewirkte Temperaturerhöhung wird die Kontraktion des Formkörpers 20 bewirkt.

Das Ausführungsbeispiel der Fig. 1 nur dadurch, daß das pyrotechnische Heizelement 13 den Formkörper 20 nicht umgibt, sondern als kompakter Block im Inneren des Formkörpers 20 angeordnet ist. In allen übrigen Konstruktionsmerkmalen ist das zweite Ausführungsbeispiel dem ersten gleich.

Bei der Ausführungsform nach Fig. 3 besteht der Formkörper ebenfalls aus einem Hohlzylinder, der einen längslaufenden Schlitz 21 aufweist, welcher sich über die gesamte Länge des Formkörpers 20 erstreckt. Das Betätigungselement 18 in Form eines Stiftes aus Vollmaterial ist an dem einen Ende des Formkörpers 20 fest angebracht. Das entgegengesetzte Ende ist an dem (nicht dargestellten) Gehäuse befestigt. Dieses Ende weist eine Öffnung 22 zum Einsetzen eines Heizelementes 23 in Form einer Heizpatrone auf. Die Anschlußdrähte 24 werden aus dem Gehäuse herausgeführt.

Der Formkörper 20 besteht auch hier aus einem Metall mit Formgedächtnis, vorzugsweise aus Tinel. Der Einzugsweg des Betätigungselementes beträgt, beispielsweise bei einer Länge des Formkörpers 20 von 30 mm, 3 mm.

**Patentansprüche**

1. Kraftelement zum Betätigen von Stell oder Auslöseeinrichtungen, enthaltend ein aus einem Gehäuse (10) herausragendes Betätigungselement (18), bewegbar durch eine elektrisch auslösbare Bewegungsvorrichtung aus einem temperaturabhängig sein Gefüge und seine Form sprunghaft veränderndem Material mit Formgedächtnis, dadurch gekennzeichnet, daß die Bewegungsvorrichtung als geschlitztes (21) Rohr (20) ausgebildet und eine auf das Rohr (20) abgestimmte Heizvorrichtung (13, 23) vorhanden ist.

2. Kraftelement nach Anspruch 1, dadurch gekennzeichnet, daß die Heizvorrichtung (13) eine pyrotechnische Ladung mit einem Zündelement (16) ist.

3. Kraftelement nach Anspruch 1, dadurch gekennzeichnet, daß die Heizvorrichtung (23) eine Heizpatrone ist.

4. Kraftelement nach Anspruch 1, 2 oder 3, dadurch gekennzeichnet, daß das Gehäuse (10) aus schlecht wärmeleitendem Material besteht.

## Claims

1. Force element for the actuation of setting or release arrangements, containing an actuating element (18) extending from a housing (10), which is displaceable by means of an electricaly releasable actuating arrangement formed of a material with shape memory which alters suddenly its structure and its shape in accordance with temperature, characterised in that the displacement arrangement is formed as slotted (21) tube (20) and a heating arrangement (13, 23) appropriate to the tube (20) is provided.

2. Force element according to claim 1, characterised in that the heating arrangement (13) is a pyrotechnic charge with a detonation element (16).

3. Force element according to claim 1, characterised in that the heating arrangement is a heater cartridge.

4. Force element according to claim 1, 2 or 3, characterised in that the housing (10) consists of a poorly heat conducting material.

## Revendications

1. Elément moteur pour la commande de dispositifs de réglage ou de déclenchement, comportant un élément de commande (18) dépassant d'un boîtier (10), qui peut se mouvoir sous l'action d'un dispositif de mise en mémoire de forme modifiant par à-coups sa structure et sa forme en fonction de la température, caractérisée en ce que le dispositif de mise en mouvement a la forme d'un tube (20) pourvu d'une fente (21) et en ce qu'un dispositif de chauffage (13, 23), adapté au tube (20), est présent.

2. Elément moteur selon la revendication 1, caractérisé en ce que le dispositif de chauffage (13) est une charge pyrotechnique avec un élément d'allumage (16).

3. Elément moteur selon la revendication 1, caractérisé en ce que le dispositif de chauffage (23) et une cartouche chauffante.

4. Elément moteur selon la revendication 1, 2 ou 3, caractérisé en ce que le boîtier (10) se compose d'une matière mauvaise conductrice de la chaleur.

EP 0 185 875 B1

FIG. 1

FIG. 2

FIG. 3